# EUROPÄISCHE PATENTSCHRIFT

(11) **EP 2 773 248 B1**
(45) Veröffentlichungstag und Bekanntmachung des Hinweises auf die Patenterteilung: **06.09.2017**
(21) Anmeldenummer: 12783900.9
(22) Anmeldetag: 10.10.2012
(51) Int. Cl.: A47J 36/32, A47J 27/08

(54) **STEUERUNGS-, REGELUNGS- UND BEDIENVORRICHTUNG FÜR EIN GARGERÄT**
CONTROL- AND OPERATING DEVICE FOR A COOKING APPLIANCE
DISPOSITIF DE CONTROL ET OPERATION POUR UN UTENSILE DE CUISINE

(30) Priorität: 31.10.2011 DE 102011085521
(43) Veröffentlichungstag der Anmeldung: 10.09.2014
(73) Patentinhaber: WMF Württembergische Metallwarenfabrik AG, 73309 Geislingen/Steige (DE)
(72) Erfinder: BARTH, Peter, 89601 Schelklingen (DE); DÖPPE, Matthias, 89129 Langenau (DE); NEUMAYER, Martin, 89547 Gerstetten-Dettingen (DE)
(74) Vertreter: BRP Renaud & Partner mbB Rechtsanwälte Patentanwälte Steuerberater
(86) Internationale Anmeldenummer: PCT/EP2012/070084
(87) Internationale Veröffentlichungsnummer: WO 2013/064347

(56) Entgegenhaltungen:
- CH-A5- 688 458
- DE-A1-102008 051 265
- DE-U1-202011 003 293
- FR-A1- 2 931 648
- JP-A- 2002 345 641

## Beschreibung

Die vorliegende Erfindung betrifft eine Steuerungs-, Regelungs- und Bedienvorrichtung für ein Gargerät, insbesondere für einen Schnellkochtopf, gemäß dem Oberbegriff des Anspruchs 1. Die Erfindung betrifft außerdem ein mit einer derartigen Steuerungs-, Regelungs- und Bedienvorrichtung ausgestattetes Gargerät sowie ein Verfahren zum Betreiben eines derartigen Gargerätes.

Durch den in einem Dampf- oder Schnellkochtopf herrschenden Überdruck und der damit einhergehenden höheren Gartemperatur lässt sich die Garzeit entsprechend verkürzen. Aufgrund der so genannten RGT-Regel (Reaktionsgeschwindigkeit-Temperatur-Regel) erhöht sich die Kochgeschwindigkeit um bis zu dem Faktor 4 gegenüber einem drucklosen Kochen. Damit der Benutzer Einfluss auf den jeweiligen Kochvorgang nehmen kann, wird ihm mit Hilfe eines Federmechanismus der Innendruck im Dampfkochtopf angezeigt, wobei die Federn des Federmechanismus üblicherweise in ihren Eigenschaften sowohl Herstellungstoleranzen als auch Temperaturschwankungen unterliegen und dadurch eine Anzeige relativ ungenau machen. Des Weiteren arbeiten derartige federbelastete Systeme mit Relativ- und nicht mit Absolutdruckwerten so dass für die Druckanzeige bzw. das Sicherheitsventil die Druckdifferenz, also ein Druckunterschied zwischen Außen- und Innendruck relevant ist. Problematisch wird dieser Umstand insbesondere aufgrund des Einflusses von Wetterlagen oder aufgrund unterschiedlicher Höhenlagen über dem Meeresspiegelniveau bei Verwendung von druckbeaufschlagten Systemen. Die DE 10 2008 051 265 offenbart eine Steuerungs- und Bedienvorrichtung für ein Gargerät, welches die RGT Regel berücksichtigt. JP 2002 345641 A offenbart ein Gargerät, welches die Einstellung von drei Gargraden "soft", "standard" und "hard" erlaubt.

Nachteilig bei den bekannten Systemen ist jedoch, dass diese nur die faktischen Temperatur und Druckverhältnisse abbilden, nicht aber individuelle Geschmäcker berücksichtigen können.

Die vorliegende Erfindung beschäftigt sich mit dem Problem, für ein Gargerät, insbesondere für einen Schnellkochtopf, eine verbesserte Steuerungs-, Regelungs- und Bedienvorrichtung anzugeben, mit welcher sich insbesondere individuelle Geschmackspräferenzen besser berücksichtigen lassen.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, in eine Steuerungs-, Regelungs- und Bedienvorrichtung für ein Gargerät, insbesondere für einen Schnellkochtopf, eine Einstelleinrichtung zum Einstellen von zumindest zwei unterschiedlichen Gargraden bzw. Garstufen zu integrieren und dadurch individuelle geschmackliche Präferenzen zu berücksichtigen. Die Steuerungs-, Regelungs- und Bedienvorrichtung weist weiter einen Datenspeicher auf, in dem lebensmittelspezifische Gardaten unter Berücksichtigung der RGT-Regel hinterlegt sind. Über zumindest eine Sensoreinrichtung ist die Steuerungs-, Regelungs- und Bedienvorrichtung in der Lage, zumindest einen, einen Garprozess beeinflussenden Parameter, wie bspw. Druck und/oder Temperatur innerhalb und/oder außerhalb des Gargeräts zu erfassen. Kernstück der Erfindung ist darüber hinaus zumindest ein Mikrokontroller und/oder Mikroprozessor zur Datenverarbeitung und Steuerung/Regelung des Garprozesses in Abhängigkeit des vom Benutzer eingestellten, das heißt dem individuellen Geschmack entsprechenden Gargrades und den lebensmittelspezifischen Gardaten unter Berücksichtigung der RGT-Regel. In dem Datenspeicher sind somit individuelle lebensmittelspezifische Gardaten, wie bspw. Gartemperatur und zugehörige Gardauer hinterlegt, wobei diese lebensmittelspezifische Gardaten mittels der RGT-Regel an die tatsächlich vorhandenen Temperaturverhältnisse angepasst werden. In Abhängigkeit dieser Parameter und zusätzlich in Abhängigkeit des vom Benutzer gewünschten Gargrades, erfolgt nun die Steuerung bzw. Regelung des eigentlichen Garprozesses durch den Mikrokontroller und/oder Mikroprozessor, der wiederum über die zumindest eine Sensoreinrichtung fortdauernd über die im Gargerät herrschende Temperatur und den darin herrschenden Druck informiert wird. Zur Steuerung/Regelung des Garprozesses in Abhängigkeit der zuvor erwähnten Parameter kann die Steuerungs-, Regelungs- und Bedienvorrichtung den Fortschritt des Garprozesses an einer Anzeigeeinrichtung anzeigen oder aber bspw. Einfluss auf eine Ventileinrichtung am Gargerät und/oder Einfluss auf die Heizleistung bspw. eines Herdes nehmen. Zu diesem Zweck kann die Steuerungs-, Regelungs- und Bedienvorrichtung bspw. drahtlos mit dem Herd kommunizieren. Mit der erfindungsgemäßen Steuerungs-, Regelungs- und Bedienvorrichtung ist somit ein individuelle Geschmackspräferenzen berücksichtigendes und insbesondere reproduzierbares Kochergebnis erzielbar, ohne dass hierfür individuelle und weitreichende Kenntnisse des Benutzers erforderlich wären. Selbstverständlich ist dabei auch denkbar, dass die erfindungsgemäße Steuerungs-, Regelungs- und Bedienvorrichtung keinerlei Einfluss, weder auf das Gargerät noch auf den Herd nimmt, sondern lediglich den jeweiligen optimalen Garprozess vorausberechnet und nach Erreichen der vordefinierten Gardauer, die permanent überprüft wird, ein entsprechendes Signal, bspw. optisch oder akustisch, erzeugt, welches dem Benutzer anzeigt, das Gargerät vom Herd zu nehmen und/oder abzukühlen.

Bei einer vorteilhaften Weiterbildung der erfindungsgemäßen Lösung sind insgesamt drei Gargrade auswählbar, nämlich "weich", "medium" oder "durch". Diese drei Gargrade stehen dabei exemplarisch für drei vordefinierte Garstufen, wobei selbstverständlich auch zwei, vier oder mehr Garstufen vorstellbar sind. Insbesondere bei mehreren auswählbaren Gargraden ist denkbar, dass diese in vordefinierten Stufen oder aber stufenlos, bspw. mittels einer analogen Skala, eines auswählbaren Zahlenwertes oder eines Drehreglers eingestellt werden können.

Zweckmäßig sind die einzelnen Gargrade individuell einstellbar, anpassbar und darüber hinaus speicherbar. Da jedes Individuum einen individuellen Geschmack und ein individuelles Geschmacksempfinden besitzt, ist es vorteilhaft, die einzelnen Gargrade auch individuell einstellen und anpassen zu können. Um dabei reproduzierbare Kochergebnisse zu erhalten, müssen diese nun individuell eingestellten bzw. angepassten Gargrade auch abspeicherbar sein, was im Datenspeicher der Steuerungs-, Regelungs- und Bedienvorrichtung ermöglicht wird. Mittels dieser individuell einstell-, anpass- und speicherbarer Gargrade lassen sich individuelle Geschmackspräferenzen hinsichtlich des Gargrades der Lebensmittel optimal berücksichtigen.

Bei einer weiteren vorteilhaften Ausführungsform der erfindungsgemäßen Lösung sind unterschiedliche Benutzerprofile mit unterschiedlichen, insbesondere individuell ausgewählten, Gardaten vorgesehen. Derartige unterschiedliche Benutzerprofile lassen sich über die individuell einstellbaren, anpassbaren und abspeicherbaren Gargrade erzeugen, sodass mit der Steuerungs-, Regelungs- und Bedienvorrichtung unterschiedlichste Personen jeweils optimal an ihre Geschmackspräferenz angepasste Kochergebnisse erzielen können. Denkbar ist hierbei, dass für unterschiedliche Lebensmittel unterschiedliche Gargrade eingestellt werden können, da eine Person Fleisch beispielsweise durch, Gemüse aber nur angekocht bevorzugt.

Zweckmäßig weist die Steuerungs-, Regelungs- und Bedienvorrichtung eine Basisstation und zumindest zwei jeweils am zugehörigen Gargerät, bspw. am zugehörigen Schnellkochtopf, befestigbare Satelliten auf, die drahtlos mit der Basisstation kommunizieren, wobei die Einstelleinrichtung, der Datenspeicher und der Mikrokontroller und/oder Mikroprozessor in der Basisstation und die Sensoreinrichtung am jeweiligen Satellit angeordnet sind. Durch diese Ausführungsform ist es möglich, mit lediglich einer einzigen Basisstation mehrere Gargeräte individuell zu steuern bzw. zu regeln und dadurch zu betreuen. Alternativ dazu kann auch vorgesehen sein, dass die Steuerungs-, Regelungs- und Bedienvorrichtung samt Einstelleinrichtung, Datenspeicher, Mikrokontroller und/oder Mikroprozessor und Sensoreinrichtung komplett am Gargerät angeordnet sind. Bei dieser Ausführungsform weist somit jedes Gargerät eine eigene Steuerungs-, Regelungs- und Bedienvorrichtung auf, wobei diese selbstverständlich in der Lage sein können, drahtlos miteinander zu kommunizieren.

Eine drahtlose Kommunikation zwischen den einzelnen Satelliten und der zugehörigen Basisstation kann bspw. über W-Lan, BlueTooth, GSM, UMTS, DEC und RFID erfolgen, wobei die jeweiligen Abkürzungen in den Ansprüchen erläutert sind. Besonders sog. RFID-Chips besitzen dabei den Vorteil, dass diese über Radiowellen mit Energie versorgt werden können und dadurch keine eigene und autarke Energieversorgung erfordern. Selbstverständlich ist auch eine alternative Energieversorgung, bspw. mittels PTC-Elementen oder Solarzellen denkbar. Auch eine W-Lan-Übertragung von Daten in lokale Netzwerke und Auswertung derselben ist prinzipiell vorstellbar.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch:
- Fig. 1: insgesamt drei Gargeräte in Form von Kochtöpfen mit jeweils einer individuellen Steuerungs-, Regelungs- und Bedienvorrichtung,
- Fig. 2: eine Steuerungs-, Regelungs- und Bedienvorrichtung mit einer Basisstation und jeweils einem am zugehörigen Gargerät angeordneten Satellit.

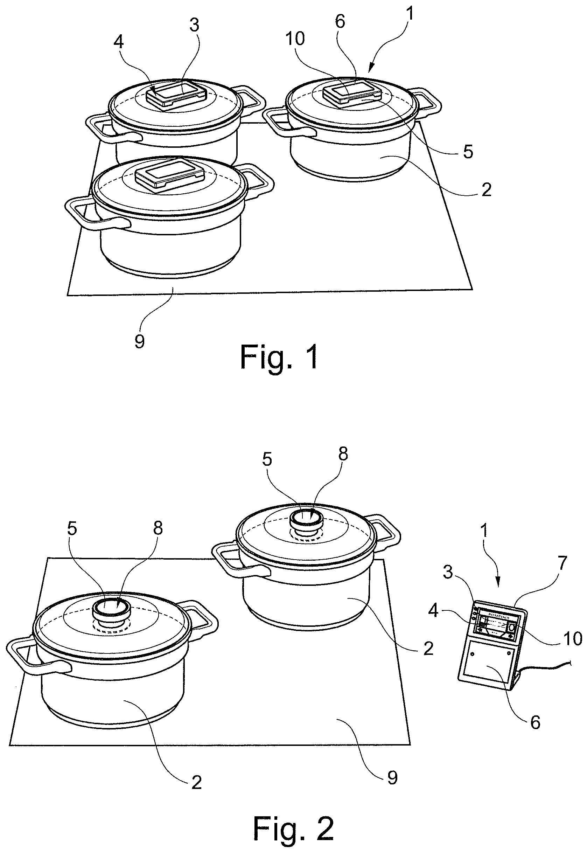

Entsprechend der Fig. 1, weist eine erfindungsgemäßes Steuerungs-, Regelungs- und Bedienvorrichtung 1 für ein Gargerät 2, bspw. für einen Schnellkochtopf oder einen normalen, mittels eines Deckels verschließbaren Topf, eine Einstelleinrichtung 3 zum Einstellen von zumindest zwei unterschiedlichen Gargraden auf. Zusätzlich besitzt die erfindungsgemäße Steuerungs-, Regelungs- und Bedienvorrichtung 1 einen Datenspeicher 4, in welchem lebensmittelspezifische Gardaten unter Berücksichtigung der sog. RGT-Regel (Reaktionsgeschwindigkeit-Temperatur-Regel) hinterlegt sind. Ebenso umfasst die Steuerungs-, Regelungs- und Bedienvorrichtung 1 zumindest eine Sensoreinrichtung 5 zur Erfassung von zumindest einem, den Garprozess beeinflussenden Parameter, wie bspw. Druck und/oder Temperatur. Kernstück der Erfindung ist ein Mikrokontroller und/oder Mikroprozessor 6 zur Datenverarbeitung und zur Steuerung bzw. Regelung des Garprozesses in Abhängigkeit des gewünschten/eingestellten Gargrades und den lebensmittelspezifischen Gardaten.

Über die Einstelleinrichtung 3 können dabei individuell gewünschte Gargrade bspw. "weich", "medium" oder "durch" ausgewählt werden. Selbstverständlich sind auch darüber hinausgehende Gargrade auswählbar und zwar entweder in vordefinierten Stufen oder aber stufenlos, bspw. mittels eines nicht näher bezeichneten Drehreglers.

Die Sensoreinrichtung 5 kann insbesondere einen Temperatursensor, wie bspw. einen NTC- oder einen PTC-Widerstand, einen Drucksensor und/oder einen Füllstandsensor aufweisen, der eine Füllhöhe im Gargerät 2 ermittelt. Die einzelnen Gargrade sind dabei individuell einstellbar, anpassbar und im Datenspeicher 4 abspeicherbar, wodurch sich individuelle Benutzerprofile erstellen lassen. Hierbei lassen sich auch unterschiedliche Gargrade für unterschiedliche Lebensmittel hinterlegen und einem Benutzerprofil zuordnen,

Prinzipiell gibt es zwei alternative Ausführungsformen der erfindungsgemäßen Steuerungs-, Regelungs- und Bedienvorrichtung 1, nämlich die gemäß der Fig. 1 gezeigte und die dazu alternativ in Fig. 2 gezeigte. Bei der gemäß der Fig. 1 gezeigten Steuerungs-, Regelungs- und Bedienvorrichtung 1 ist diese samt Einstelleinrichtung 3, Datenspeicher 4, Mikrokontroller und/oder Mikroprozessor 6 und Sensoreinrichtung 5 am Gargerät 2 angeordnet. Alternativ hierzu besitzt die Steuerungs-, Regelungs- und Bedienvorrichtung 1 gemäß der Fig. 2 eine Basisstation 7 und zumindest einen am jeweilig zugehörigen Gargerät 2 befestigbaren Satelliten 8. Dabei sind die Einstelleinrichtung 3, der Datenspeicher 4 und der Mikrokontroller und/oder Mikroprozessor 6 in der Basisstation 7 angeordnet, wogegen die Sensoreinrichtung 5 am jeweiligen Satellit 8 angeordnet ist.

Die einzelnen Satelliten 8 untereinander und/oder die Satelliten 8 und die Basisstation 7 können dabei bspw. über W-Lan, über BlueTooth, über GSM, über UMTS, über DEC oder über RFID-Technologie miteinander kommunizieren. Dabei ist denkbar, dass die Steuerungs-, Regelungs- und Bedienvorrichtung 1 bspw. auch eine Heizleistung eines Herdes 9 steuert bzw. regelt, auf welchem das jeweilige Gargerät 2 abgestellt ist.

Ebenfalls vorstellbar ist das Vorsehen eines GPS-Senders 4, mittels welchem die jeweiligen Koordinaten und damit auch die Höhendaten der erfindungsgemäßen Steuerungs-, Regelungs- und Bedienvorrichtung 1 bestimmt werden. Da auch der sich mit der Höhe ändernde Luftdruck Einfluss auf den Garprozess hat, könnten diese Höhendaten zur Verfeinerung des Steuerungs-/Regelungsprozess ebenfalls einfließen.

Mit der erfindungsgemäßen Steuerungs-, Regelungs- und Bedienvorrichtung 1 sind individuelle Benutzerprofile auswählbar und unterschiedliche Gradgrade einstellbar und werden beim Garprozess berücksichtigt, wodurch individuelle Geschmackspräferenzen berücksichtigt werden können. Auf einem Display 10 der Steuerungs-, Regelungs- und Bedienvorrichtung 1 kann dabei bspw. die ermittelte Gardauer und/Gartemperatur angezeigt werden, wobei die Steuerungs-, Regelungs- und Bedienvorrichtung 1 darüber hinaus in der Lage ist, nach dem Ablaufen der ermittelten Gardauer ein entsprechendes Signal, bspw. optischer oder akustischer Art auszugeben.

## Patentansprüche

1. Steuerungs-, Regelungs- und Bedienvorrichtung (1) für ein Gargerät (2), insbesondere einen Schnellkochtopf, mit
- einer Einstelleinrichtung (3) zum Einstellen von zumindest zwei unterschiedlichen Gargraden,
- einem Datenspeicher (4), in welchem lebensmittelspezifische Gardaten unter Berücksichtigung der RGT-Regel (Reaktionsgeschwindigkeit-Temperatur-Regel) hinterlegt sind,
- zumindest einer Sensoreinrichtung (5) zur Erfassung von zumindest einem, einen Garprozess beeinflussenden Parameter,
- zumindest einem Mikrokontroller und/oder Mikroprozessor (6) zur Datenverarbeitung und Steuerung/Regelung des Garprozesses in Abhängigkeit des eingestellten Gargrades und den lebensmittelspezifischen Gardaten unter Berücksichtigung der RGT-Regel,
**dadurch gekennzeichnet, dass**
die Gargrade individuell einstellbar, anpassbar und speicherbar sind.

2. Steuerungs-, Regelungs- und Bedienvorrichtung nach Anspruch 1,
**dadurch gekennzeichnet,**
- **dass** drei Gargrade auswählbar sind, "weich", "medium" oder "durch", oder
- **dass** mehrere Gargrade stufenlos oder in vordefinierten Stufen auswählbar sind.

3. Steuerungs-, Regelungs- und Bedienvorrichtung nach einem der vorhergehenden Ansprüche,
**dadurch gekennzeichnet,**
**dass** die Sensoreinrichtung (5) zumindest einen Temperatursensor, wie z. B. ein NTC- oder PTC-Widerstand, einen Drucksensor und/oder einen Füllstandssensor aufweist.

4. Steuerungs-, Regelungs- und Bedienvorrichtung nach einem der vorhergehenden Ansprüche,
**dadurch gekennzeichnet,**
- **dass** die Steuerungs-, Regelungs- und Bedienvorrichtung (1) eine Basisstation (7) und zumindest einen am zugehörigen Gargerät (2) befestigbaren Satelliten (8) aufweist, der drahtlos mit der Basisstation (7) kommuniziert, wobei die Einstelleinrichtung (3), der Datenspeicher (4) und der Mikrokontroller und/oder Mikroprozessor (6) in der Basisstation (7) und die Sensoreinrichtung (5) am jeweiligen Satellit angeordnet sind, oder
- **dass** die Steuerungs-, Regelungs- und Bedienvorrichtung (1) samt Einstelleinrichtung (3), Datenspeicher (4), Mikrokontroller und/oder Mikroprozessor (6) und Sensoreinrichtung (5) am Gargerät (2) angeordnet sind.

5. Steuerungs-, Regelungs- und Bedienvorrichtung nach Anspruch 4, erste Alternative,
**dadurch gekennzeichnet,**
**dass** eine Kommunikation zwischen Satellit (8) und Basisstation (7) über
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification) erfolgt.

6. Steuerungs-, Regelungs- und Bedienvorrichtung nach einem der vorhergehenden Ansprüche,
**dadurch gekennzeichnet,**
**dass** die unterschiedliche Benutzerprofile mit unterschiedlichen, insbesondere individuell ausgewählten, Gardaten vorgesehen sind.

7. Schnellkochtopf, mit einer Steuerungs-, Regelungs- und Bedienvorrichtung (1) nach einem der vorhergehenden Ansprüche.

8. Schnellkochtopf nach Anspruch 7,
**dadurch gekennzeichnet,**
**dass** die Steuerungs-, Regelungs- und Bedienvorrichtung (1) in den Deckel des Gargeräts (2) integriert oder von diesem abnehmbar ausgebildet ist.

9. Verfahren zum Betreiben eines Schnellkochtopfs (2) nach Anspruch 7 oder 8, bei dem
- vor oder nach dem Befüllen und Schließen des Schnellkochtopfs (2), der gewünschte Gargrad ausgewählt bzw. eingestellt wird,
- der Mikrokontroller und/oder Mikroprozessor (6) den Garprozess in Abhängigkeit des eingestellten Gargrades und den lebensmittelspezifischen Gardaten unter Berücksichtigung der RGT-Regel berechnet und den Garprozess entsprechend steuert/regelt.

## Claims

1. Control, regulation and operating device (1) for a cooking appliance (2), in particular a pressure cooker, with
- an adjusting device (3) for adjusting at least two different degrees of cooking,
- a data memory (4) in which food-specific cooking data are stored while taking into account the RGT rule (reaction speed-temperature-rule),
- at least one sensor device (5) for detecting at least one parameter that influences a cooking process,
- at least one microcontroller and/or microprocessor (6) for data processing and control/regulation of the cooking process as a function of the set degree of cooking and the food-specific cooking data while taking into account the RGT rule,
**characterised in that**
the degrees of cooking can be individually set, adjusted and stored.

2. Control, regulation and operating device according to claim 1,
**characterised in that**
- three degrees of cooking can be selected, "low", "medium" or "well done", or
- multiple degrees of cooking can be continuously variably selected or selected in predefined levels.

3. Control, regulation and operating device according to any of the preceding claims,
**characterised in that**
the sensor device (5) comprises at least one temperature sensor, e.g. an NTC or PTC resistor, one pressure sensor and/or one filling level sensor.

4. Control, regulation and operating device according to any of the preceding claims,
**characterised in that**
- the control, regulation and operating device (1) comprises a base station (7) and at least one satellite (8) which can be mounted on the corresponding cooking appliance (2) and wirelessly communicates with the base station (7), wherein the adjusting device (3), the data memory (4) and the microcontroller and/or microprocessor (6) are arranged in the base station (7) and the sensor device (5) is arranged on the respective satellite, or
- the control, regulation and operating device (1) together with the adjusting device (3), the data memory (4), the microcontroller and/or microprocessor (6) and the sensor device (5) are arranged on the cooking appliance (2).

5. Control, regulation and operating device according to claim 4, first alternative,
**characterised in that**
a communication between satellite (8) and base station (7) takes place via
- WLAN (Wireless Local Area Network),
- Bluetooth,
- GSM (Global System for Mobile Communications),
- UMTS (Universal Mobile Telecommunications System),
- DECT (Digital Enhanced Cordless Telecommunications),
- RFID (Radio Frequency Identification).

6. Control, regulation and operating device according to any of the preceding claims,
**characterised in that**
the different user profiles are provided with different, in particular individually selected degrees of cooking.

7. Pressure cooker with a control, regulation and operating device (1) according to any of the preceding claims.

8. Pressure cooker according to claim 7,
**characterised in that**
the control, regulation and operating device (1) is integrated in the lid of the cooking appliance (2) or is detachable from the cooking appliance.

9. Method for operating a pressure cooker (2) according to claim 7 or 8, wherein
- the desired degree of cooking is selected or set prior to or after filling and closing of the pressure cooker (2),
- the microcontroller and/or microprocessor (6) calculates the cooking process as a function of the set degree of cooking and the food-specific cooking data while taking into account the RGT rule and controls/regulates the cooking process accordingly.

## Revendications

1. Dispositif de commande, de régulation et d'utilisation (1) pour un appareil de cuisson (2), en particulier pour un autocuiseur, comprenant
- un système de réglage (3) servant à régler au moins deux niveaux de cuisson différents,
- une mémoire de données (4), dans laquelle des données de cuisson spécifiques à des produits alimentaires sont enregistrées en tenant compte de la règle RGT (règle vitesse de réaction - température),
- au moins un système de capteur (5) servant à détecter au moins un paramètre ayant une incidence sur un processus de cuisson,
- au moins un microcontrôleur et/ou un microprocesseur (6) servant à traiter des données et servant à commander/réguler le processus de cuisson en fonction du degré de cuisson réglé et des données de cuisson spécifiques aux produits alimentaires en tenant compte de la règle RGT,
**caractérisé en ce que**
les degrés de cuisson peuvent être réglés, adaptés et mémorisés de manière individuelle.

2. Dispositif de commande, de régulation et d'utilisation selon la revendication 1,
**caractérisé en ce**
- **que** trois degrés de cuisson peuvent être sélectionnés, « doux », « intermédiaire » ou « bien cuit »,
ou
- **que** plusieurs degrés de cuisson peuvent être sélectionnés de manière continue ou lors d'étapes prédéfinies.

3. Dispositif de commande, de régulation et d'utilisation selon l'une quelconque des revendications précédentes,
**caractérisé en ce**
**que** le système de capteur (5) présente au moins un capteur de température, comme par ex. une résistance NTC ou PTC, un capteur de pression et/ou un capteur de niveau de remplissage.

4. Dispositif de commande, de régulation et d'utilisation selon l'une quelconque des revendications précédentes,
**caractérisé en ce**
- **que** le dispositif de commande, de régulation et d'utilisation (1) présente une station de base (7) et au moins un satellite (8) pouvant être fixé au niveau de l'appareil de cuisson (2) associé, lequel satellite communique sans fil avec la station de base (7), dans lequel le système de réglage (3), la mémoire de données (4) et le microcontrôleur et/ou le microprocesseur (6) sont disposés dans la station de base (7) et le système de capteur (5) est disposé au niveau du satellite respectif,
ou
- **que** le dispositif de commande, de régulation et d'utilisation (1), y compris le système de réglage (3), la mémoire de données (4), le microcontrôleur et/ou le microprocesseur (6) et le système de capteur (5) sont disposés au niveau de l'appareil de cuisson (2).

5. Dispositif de commande, de régulation et d'utilisation selon la revendication 4, première variante,
**caractérisé en ce**
**qu'**une communication entre le satellite (8) et la station de base (7) est effectuée par
- WLAN (Wireless Local Area Network),
- Bluetooth,
- GSM (Global System for Mobile Communications),
- UMTS (Universal Mobile Telecommunications System) ;
- DECT (Digital Enhanced Cordless Telecommunications) ;
- RFID (Radio Frequency Identification).

6. Dispositif de commande, de régulation et d'utilisation selon l'une quelconque des revendications précédentes,
**caractérisé en ce**
**que** les différents profils d'utilisateurs sont prévus avec différentes données de cuisson, sélectionnées en particulier de manière individuelle.

7. Autocuiseur comprenant un dispositif de commande, de régulation et d'utilisation (1) selon l'une quelconque des revendications précédentes.

8. Autocuiseur selon la revendication 7,
**caractérisé en ce**
**que** le dispositif de commande, de régulation et d'utilisation (1) est intégré dans le couvercle de l'appareil de cuisson (2) ou est réalisé par ce dernier de manière à pouvoir être retiré.

9. Procédé servant à faire fonctionner un autocuiseur (2) selon la revendication 7 ou 8, dans lequel
- avant ou après le remplissage et la fermeture de l'autocuiseur (2), le degré de cuisson souhaité est sélectionné ou réglé,
- le microcontrôleur et/ou le microprocesseur (6) calcule le processus de cuisson en fonction du degré de cuisson réglé et des données de cuisson spécifiques aux produits alimentaires en tenant compte de la règle RGT et commandent/régulent le processus de cuisson de manière correspondante.
